(19) Europäisches Patentamt
European Patent Office
Office européen des brevets

(11) **EP 1 971 074 A2**

(12) **EUROPEAN PATENT APPLICATION**

(43) Date of publication:
**17.09.2008 Bulletin 2008/38**

(51) Int Cl.:
**H04L 9/32** (2006.01)

(21) Application number: **07123701.0**

(22) Date of filing: **19.12.2007**

<table>
<tr><td>(84) Designated Contracting States:<br><b>AT BE BG CH CY CZ DE DK EE ES FI FR GB GR HU IE IS IT LI LT LU LV MC MT NL PL PT RO SE SI SK TR</b><br>Designated Extension States:<br><b>AL BA HR MK RS</b></td><td>(72) Inventors:<br>• <b>Ju, Hak-soo</b><br><b>Samsung Electronics Co Ltd</b><br><b>Gyeonggi-do (KR)</b><br>• <b>Kim, Myung-sun</b><br><b>Gyeonggi-do (KR)</b><br>• <b>Moon, Ji-young</b><br><b>Gyeonggi-do (KR)</b></td></tr>
<tr><td>(30) Priority: <b>16.03.2007 KR 20070026289</b></td><td></td></tr>
<tr><td>(71) Applicant: <b>SAMSUNG ELECTRONICS CO., LTD.</b><br><b>Suwon-si,</b><br><b>Gyeonggi-do (KR)</b></td><td>(74) Representative: <b>Davies, Robert Ean</b><br><b>Appleyard Lees</b><br><b>15 Clare Road</b><br><b>Halifax HX1 2HY (GB)</b></td></tr>
</table>

(54) **Mutual authentication method between devices using mediation module and system therefor**

(57)     A mutual authentication method using a mediation module (300) and a system therefor are provided. The method includes: storing a first partial private key obtained by dividing a first private key of a device; storing a second partial private key obtained by dividing a second private key of a host device; receiving unique identifiers (IDs) and random numbers for the device (200) and the host device (100) from the device and determining whether the unique IDs are valid; and generating a first signature value by using the first partial private key and a second signature value by using the second partial private key if the unique IDs are valid, and transmitting the generated first and second signature values to the device

FIG. 3

**Description**

Methods and apparatuses consistent with the present invention relate to security management between devices, and more particularly, to mutual authentication between a host device and a mobile device using a mediation module.

Recently, a transfer of contents using various communication media such as the Internet, ground waves, cables, satellites have been remarkably increasing. Content is increasingly sold and lent by using mass storage media such as a compact disk (CD), a digital versatile disk (DVD), and the like. Accordingly, digital rights management (hereinafter, referred to as DRM) that is a solution for protecting copyright of content becomes an important issue.

Specifically, environments for distributing digital content are extended due to combination of networks, combination of contents and services, and the like. In the past, it is possible to distribute contents through a personal computer (PC) connected to the Internet. Currently, contents are also distributed through a digital broadcasting service or a home networking service by using home appliances or mobile devices.

At this time, there occurs a problem in synchronization of wireless devices and a secured mutual access that an attacker accesses a legal wireless device by using an invalid or revoked certificate by intercepting a message.

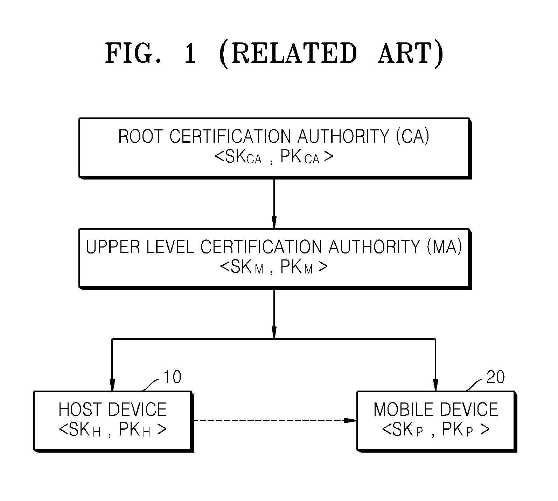

FIG. 1 illustrates a mutual authentication system between a host device 10 and a mobile device 20 according to a related art technique.

At this time, the host device 10 serves to record or reproduce received content. The mobile device 20 serves to receive the content from the host device 10 and store the received content.

For example, the host device 10 may be a set-top box, a DVD player, a satellite broadcasting terminal, and the like. The mobile device 20 may include a point of deployment (POD), a satellite broadcasting card, a portable memory card, and the like.

As shown in FIG. 1, a root certification authority CA corresponding to a content producer stores a private key $SK_{CA}$ and a public key $PK_{CA}$. An upper level certification authority corresponding to a manufacturer of the host device 10 and the mobile device 20 stores a private key $SK_M$ and a public key $PK_M$. In addition, the host device 10 stores a private key $SK_H$ and a public key $PK_H$. The mobile device 20 stores a private key $SK_P$ and a public key $PK_P$.

First, the root certification authority CA issues a certificate Man_Cert for the upper level certification authority MA by using the private key $SK_{CA}$.

Specifically, the root certification authority CA digitally signs Man_ID $\|PK_M$ by using the private key $SK_{CA}$ as shown in Equation 1, generates the certificate Man_Cert for the upper level certification authority MA, and transmits the certificate Man_Cert.

[Equation 1]

$$Man\_Cert = Sign(SK_{CA}, Man\_ID \| PK_M)$$

Here, Man_ID is a unique identifier (ID) of a device included in the certificate Man_Cert for the upper level certification authority MA.

The upper level certification authority MA issues certificates on the host device 10 and the mobile device 20 to the host device 10 and the mobile device 20.

First, the upper level certification authority MA issues the certificate Man_Cert for the upper level certification authority MA and a certificate Host_Cert for the host device 10 to the host device 10.

Specifically, as shown in Equation 2, the upper level certification authority MA digitally signs Host_ID$\| PK_H$ by using the private key $SK_M$, generates the certificate Host_Cert, and transmits the certificate Host_Cert to the host device 10.

[Equation 2]

$$Host\_Cert = Sign(SK_M, Host\_ID \| PK_H)$$

The upper level certification authority MA issues the certificate Man_Cert for the upper level certification authority MA and the certificate Mob_Cert for the mobile device 20 to the mobile device 20.

Specifically, as shown in Equation 3, the upper level certification authority MA digitally signs Mob_ID$\| PK_P$ by using the private key $SK_M$, generates the certificate Mob_Cert, and transmits the certificate Mob_Cert to the mobile device 20.

## [Equation 3]

$$Mob\_Cert = Sign(SK_M, Mob\_ID \| PK_P)$$

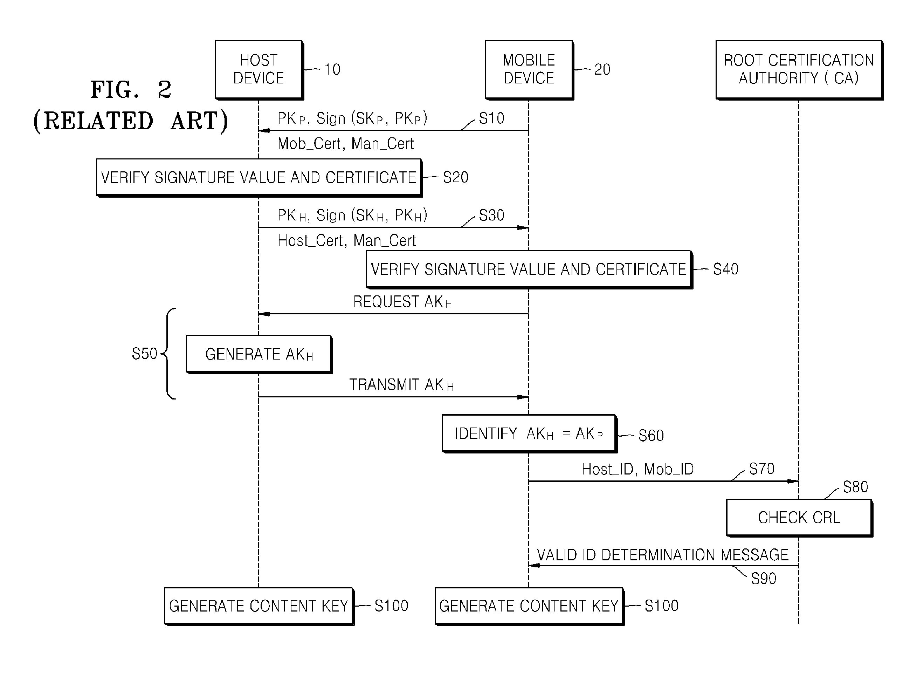

As shown in FIG. 2, the host device 10 and the mobile device 20, which issue the certificates, perform a mutual authentication process by exchanging the certificates. The mobile device 20 checks whether the certificate is valid together with the root certification authority CA or the upper level certification authority MA.

FIG. 2 illustrates a mutual authentication method between a host device 10 and a mobile device 20 according to a related art technique.

As shown in FIG. 2, when the host device 10 is connected to the mobile device 20, the host device 10 and the mobile device 20 exchange the public keys, the signatures, and the certificates with each other.

First, the mobile device 20 transmits a signature value $Sign(SK_P, PK_P)$ obtained by digitally signing the public key $PK_P$ by using the private key $SK_P$, the certificate Mob_Cert for the mobile device 20, and the certificate Man_Cert for the upper level certification authority MA to the host device 10 (operation S10).

The host device 10 verifies the certificates Mob_Cert and Man_Cert and the signature value $Sign(SK_P, PK_P)$ (operation S20).

Then, the host device 10 transmits a signature value $Sign(SK_H, PK_H)$ obtained by digitally signing the public key $PK_H$ by using the private key $SK_H$, the certificate Host_Cert for the host device 10, and the certificate Man_Cert for the upper level certification authority MA to the mobile device 20 (operation S30).

Similarly, the mobile device 20 verifies the certificates Host_Cert and Man_Cert and the signature value $Sign(SK_H, PK_H)$ (operation S40) and obtains the certificate ID Host_ID of the host device 10 from the certificate Host_Cert.

Next, when the mobile device 20 requests the host device 10 to provide an authentication key $AK_H$, the host device 10 generates the authentication key $AK_H$ of the host device 10 and transmits the generated authentication key $AK_H$ to the mobile device 20 (operation S50).

At this time, the host device 10 calculates the authentication key $AK_H$ by using a Hash function as shown in Equation 4.

## [Equation 4]

$$AK_H = Hash(g^{XY} \| Host\_ID \| Mob\_ID)$$

Here, $g^{XY}$ is in accordance with the Diffie-Hellman key agreement method in which a key is shared by using a random number. In the Diffie-Hellman key agreement method, the public key $PK_H$ of the host device 10 is represented as $g^Y$, the public key $PK_P$ of the mobile device 20 is represented as $g^X$, and $g^{XY}$ is shared as common information.

Similarly, the mobile device 20 calculates the authentication key $AK_P$ by using the Hash function as in Equation 5 and checks whether the authentication key $AK_H$ is the same as the authentication key $AK_P$ of the mobile device 20 (operation S60).

## [Equation 5]

$$AK_P = Hash(g^{XY} \| Host\_ID \| Mob\_ID)$$

As described above, the host device 10 and the mobile device 20 respectively generates the authentication keys $AK_H$ and $AK_P$ as common information by exchanging the public keys $PK_P$ and $PK_H$ and the signature values $Sign(SK_p, PK_P)$ and $Sign(SK_H, PK_H)$ with each other and check whether the authentication keys $AK_H$ and $AK_P$ are the same.

When the authentication keys are the same, the mobile device 20 approves the host device 10 as a legal device and reports the certificate IDs Host_ID and Mob_ID to the root certification authority CA in a message format (operation S70).

The root certification authority CA checks whether the certificate IDs Mob_ID and Host_ID exist in a certification revocation list (hereinafter, abbreviated to "CRL") (operation S80). When the certificate IDs Mob_ID and Host_ID are not included in the CRL, the root certification authority CA transmits a message for representing that the certificate includes a valid ID to the mobile device 20 (operation S90).

The Host_ID is a unique ID of a device included in the certificate Host_Cert for the host device 10. The Mob_ID is a unique ID of a device included in the certificate Mob_Cert for the mobile device 20. The root certification authority CA can determine whether a certificate is valid by checking an ID corresponding thereto.

When it is determined that the certificates Mob_Cert and Host_Cert are valid, the host device 10 generates a content key for encrypting or decrypting a content from the authentication key $AK_H$ and the mobile device 20 generates a content key for encrypting or decrypting a content from the authentication key $AK_P$ (operation S100).

Accordingly, when the host device 10 encrypts a content by using the content key and transmits the encrypted content to the mobile device 20, the mobile device 20 can decrypt the content by using the generated content key.

However, according to the related art technique, when the authentication key $AK_H$ transmitted from the host device 10 to the mobile device 20 is intercepted and recorded in another device by an active attacker, there is a problem that an unauthorized device and the mobile device 20 can be mutually authenticated.

In addition, when a message transmitted from the mobile device 20 to the host device 10 is intercepted by an active attacker in a procedure of communicating certificates and signature values between the host device 10 and the mobile device 20, there is a problem that an unauthorized mobile device can access the host device by storing the intercepted information.

In addition, according to the related art technique, since it is checked whether the certificate IDs Mob_ID and Host_ID are included in the CRL depending on the communication result only between the mobile device 20 and the root certification authority CA, the host device 10 cannot directly check whether the certificate of the mobile device 20 is valid.

Accordingly, since the host device 10 cannot request the root certification authority CA to check whether the certificate of the mobile device 20 is included in the CRL, there is a problem that an active attacker can access the host device 10 by using expired or revoked certificate of the mobile device 20.

Embodiments of the present invention aim to provide a method capable of maintaining high level security in mutual authentication between the host device and the mobile device by checking whether a certificate is valid through a certification authority before verifying a signature value.

According to an aspect of the present invention, there is provided a method of mediating a mutual authentication process by being connected between a device and a host device which store certificates received from a certification authority, the method including storing a (1a)-th private key obtained by dividing a first private key stored in the device; storing a (2a)-th private key obtained by dividing a second private key stored in the host device; receiving unique IDs and random numbers for the device and the host device detected from the certificate from the device and determining whether the unique IDs are valid; and generating (1a)-th and (2a)-th signature values by using the (1a)-th and (2a)-th private keys when the unique IDs are valid and transmitting the generated (1a)-th and (2a)-th signature values to the device.

The device may store a (1b)-th private key obtained by dividing the first private key, and the host device may store a (2b)-th private key obtained by dividing the second private key.

The device and the host device may exchange the certificate on the device for the certificate on the host device, exchange a (1b)-th signature value generated by using the (1b)-th private key for a (2b)-th signature value generated by using the (2b)-th private key, and store the exchanged certificates and signature values, before receiving the unique IDs from the device.

The device may generate and verify a total signature value for the host device by combining the (2a)-th signature value with the (2b)-th signature value after receiving the (1a)-th and (2a)-th signature values, and generate a first authentication key for the device.

The host device may generate and verify a total signature value for the device by combining the (1a)-th signature value with the (1b)-th signature value after receiving the (1a)-th signature value, and generate a second authentication key for the host device.

When the first authentication key is the same as the second authentication key, the host device may generate a content key for encrypting or decrypting a content.

In the determining whether in the unique IDs are valid, it may be checked whether the unique IDs are valid by using a certificate revocation list updated by the certification authority.

According to another aspect of the present invention, there is provided a mutual authentication method with a host device by using a mediation module connected to the host device, by storing a certificate received from a certification authority, the mutual authentication method including dividing the first private key into (1a)-th and (1b)-th private keys and transmitting the (1a)-th private key to the mediation module; exchanging the certificate for a certificate on the host device with the host device, generating a (1b)-th signature value from the (1b)-th private key, and exchanging the (1b)-th signature value with the host device; transmitting unique IDs and random numbers generated by using the certificates to the mediation module; and generating and verifying a total signature value for the host device by using a partial signature value received from the mediation module, and generating a first authentication key, when the unique IDs are valid.

A second private key stored in the host device may be divided into (2a)-th and (2b)-th private keys and the (2a)-th private key may be stored in the mediation module, and a (2b)-th signature value generated by using the (2b)-th private key may be exchanged for the (1b)-th signature value.

When the unique IDs are valid, the (1a)-th and (2a)-th signature values generated by using the (1a)-th and (2a)-th private keys may be received, and a total signature value for the host device may be generated and verified by combining the (2a)-th signature value with the (2b)-th signature value.

The (1a)-th signature value may be transmitted to the host device, and a content key for encrypting or decrypting a content may be generated, when a second authentication key generated by the host device may be the same as the first authentication key.

In the host device, the second authentication key may be generated by combining the (1a)-th signature value with the (1b)-th signature value.

According to another aspect of the present invention, there is provided a mediation module including an interface which is connected between a device and a host device that store certificates received from a certification authority to transmit various types of key information, receiving a certificate revocation list updated by the certification authority; a key storage unit which stores a (1a)-th private key obtained by dividing a first private key stored in the device and a (2a)-th private key obtained by dividing a second private key stored in the host device; a control unit which receives unique IDs and random numbers for the device and the host device detected from the certificate from the device and determines whether the unique IDs are valid; and a mediation module which generates (1a)-th and (2a)-th signature values by using the (1a)-th and (2a)-th private keys, when the unique IDs are valid.

According to another aspect of the present invention, there is provided a device which performs a mutual authentication process with a host device by using a mediation module connected to the host device, by storing a certificate received from a certification authority, the device including a key generation unit which divides a first private key into (1a)-th and (1b) private keys; an interface which transmits the (1a)-th private key and unique IDs and random numbers generated by using the certificate to the mediation module; a digital signature unit which exchanges the certificate and a certificate on the host device with the host device, generates a (1b)-th signature value from the (1b)-th private key, and exchanges the (1b)-th signature value with the host device; and a control unit which generates and verifies a total signature value for the host device by using a partial signature value received from the mediation module when the unique IDs are valid, and generates a first authentication key. According to another aspect of the present invention, there is provided a system which performs a mutual authentication process with a host device using a mediation module connected to the host device by storing a certificate received from a certification authority, wherein the mediation module stores a (1a)-th private key obtained by dividing a first private key stored in the device and a (2a)-th private key obtained by dividing a second private key stored in the host device, wherein the device and the host device exchange a (1b)-th signature value generated by using a (1b)-th private key obtained by dividing the first private key for a (2b)-th signature value generated by using a (2b)-th private key obtained by dividing a second private key, and wherein the device transmits unique IDs and random numbers generated by using the certificates to the mediation module, when the unique IDs are valid, the device generates and verifies a total signature value for the host device by using a partial signature value received from the mediation module, and generates a first authentication key.

For a better understanding of the invention, and to show how embodiments of the same may be carried into effect, reference will now be made, by way of example, to the accompanying diagrammatic drawings in which:

FIG. 1 illustrates a mutual authentication system between a host device 10 and a mobile device 20 according to a related art technique;
FIG. 2 illustrates a mutual authentication method between a host device 10 and a mobile device 20 according to a related art technique;
FIG. 3 illustrates a mutual authentication system between a host device 100 and a mobile device 200 using a mediation module 300 according to an exemplary embodiment of the present invention;
FIG. 4A illustrates a structure of the mobile device 200 according to an exemplary embodiment of the present invention;
FIG. 4B illustrates a structure of the mediation module 300 according to an exemplary embodiment of the present invention; and
FIG. 5 illustrates a mutual authentication method between the host device 100 and the mobile device 200 using the mediation module 300.

The attached drawings for illustrating exemplary embodiments of the present invention are referred to in order to gain a sufficient understanding of the present invention, the merits thereof, and the objectives accomplished by the implementation of the present invention.

Hereinafter, the present invention will be described in detail by explaining exemplary embodiments of the invention with reference to the attached drawings. Like reference numerals in the drawings denote like elements.

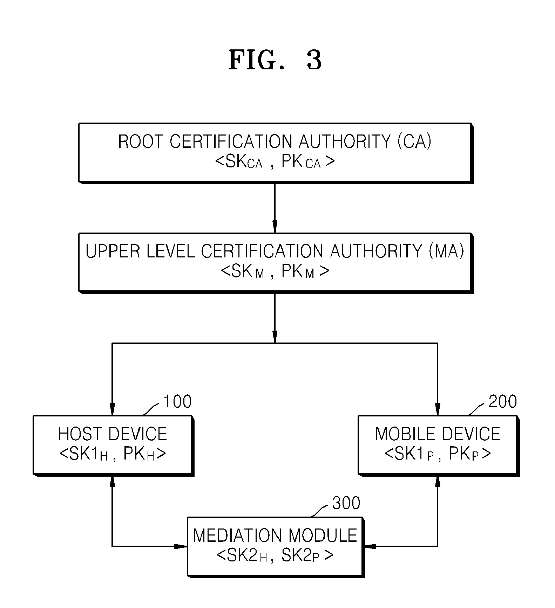

FIG. 3 illustrates a mutual authentication system between a host device 100 and a mobile device 200 using a mediation module 300 according to an exemplary embodiment of the present invention.

Unlike FIG. 1, the mutual authentication system shown in FIG. 3 further includes the mediation module 300 which serves to mediate between the host device 100 and the mobile device 200. The repeated description will be omitted.

A root certification authority CA of the host device 10 and the mobile device 20 stores a private key $SK_{CA}$ and a public key $PK_{CA}$. An upper level certification authority MA stores a private key $SK_M$ and a public key $PK_M$.

First, the root certification authority CA issues a certificate Man_Cert for the upper level certification authority MA shown in Equation 1 by using the private key $SK_{CA}$ and the public key $PK_{CA}$.

Then, the upper level certification authority MA issues certificates on the host device 100 and the mobile device 200 to the host device 100 and the mobile device 200.

Accordingly, the upper level certification authority MA issues the certificate Man_Cert for the upper level certification authority MA and the certificate Host_Cert for the host device 100 to the host device 100.

Then, the upper level certification authority MA issues the certificate Man_Cert for the upper level certification authority MA and the certificate Mob_Cert for the mobile device 200.

At this time, the host device 100 stores a public key $PK_H$. Unlike the related art technique, in Equation 6, a private key $SK_H$ is divided into two partial private keys. The host device 100 stores only a private key $SK1_H$, and the mediation module 300 stores another private key $SK2_H$.

$$[\text{Equation 6}]$$

$$SK_H = SK1_H + SK2_H$$

Like the host device 100, the mobile device 200 stores a public key $PK_P$. Unlike the related art technique, in Equation 7, a private key $SK_P$ is divided into two partial private keys. The mobile device 200 stores only a private key $SK1_P$ and the mediation module 300 stores another private key $SK2_P$.

$$[\text{Equation 7}]$$

$$SK_P = SK1_P + SK2_P$$

Accordingly, the mediation module 300 stores the partial private key $SK2_H$ of the host device 100 and the partial private key $SK2_P$ of the mobile device 200.

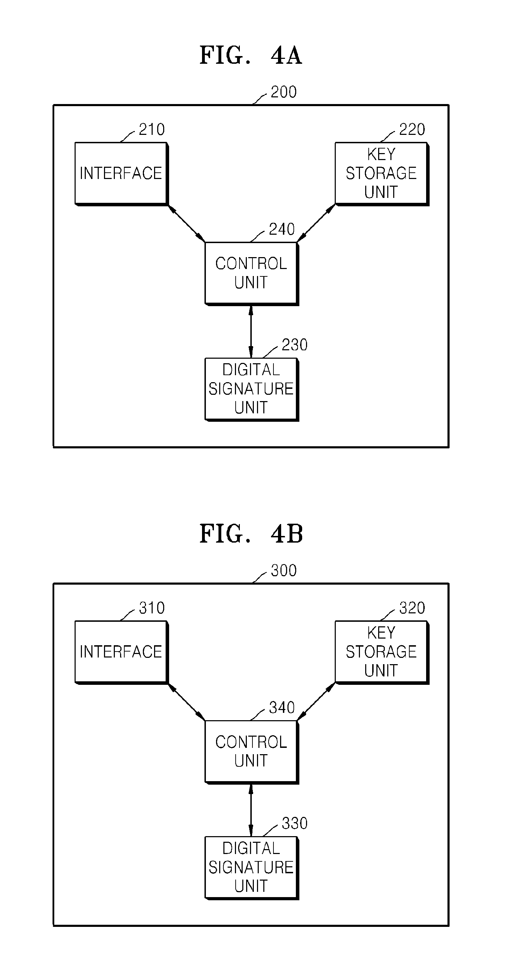

FIG. 4A illustrates a structure of the mobile device 200 according to an exemplary embodiment of the present invention.

As shown in FIG. 4A, the mobile device 200 includes an interface 210, a key storage unit 220, a digital signature unit 230, and a control unit 240.

The interface 210 exchanges various random numbers, private keys, public keys, and signature values, in a state in which the interface 210 is connected between the host device 100 and the mediation module 300.

The key storage unit 220 stores the public key $PK_P$. As described above, the private key is divided into the two partial private keys. The key storage unit stores only the private key $SK1_P$, and the other private key $SK2_P$ is transmitted to the mediation module 300.

The digital signature unit 230 generates a partial signature value by using the private key $SK1_P$ and exchanges the partial signature value for a partial signature value generated by using the private key $SK1_H$ stored in the host device 100.

When determining that IDs Mob_ID and Host_ID are valid unique IDs, the control unit 240 generates and verifies the total signature value for the host device 100, and generates an authentication key.

Since the structure of the host device 100 is substantially similar to that of the mobile device 200, the detailed description on the structure of the host device 100 will be omitted.

FIG. 4B illustrates a structure of the mediation module 300 according to an exemplary embodiment of the present invention.

As shown in FIG. 4B, the mediation module 300 includes an interface 310, a key storage unit 320, a digital signature unit 330, and a control unit 340.

The interface 310 exchanges various random numbers, private keys, and signature values with the host device 100 or mobile device 200, in a state in which the mediation module 300 is connected between the host device 100 and the mobile device 200.

The key storage unit 320 stores a partial private key $SK2_H$ of the host device 100 and a partial private key $SK2_p$ of the mobile device 200.

The digital signature unit 330 digitally signs by using the stored partial private keys $SK2_H$ and $SK2_P$ and transmits the digital signature values to the mobile device 200.

The control unit 340 checks whether the IDs Mob_ID and Host_ID exist in a certificate revocation list (CRL). The control unit 340 manages various signature values and private keys between the host device 100 and the mobile device 200.

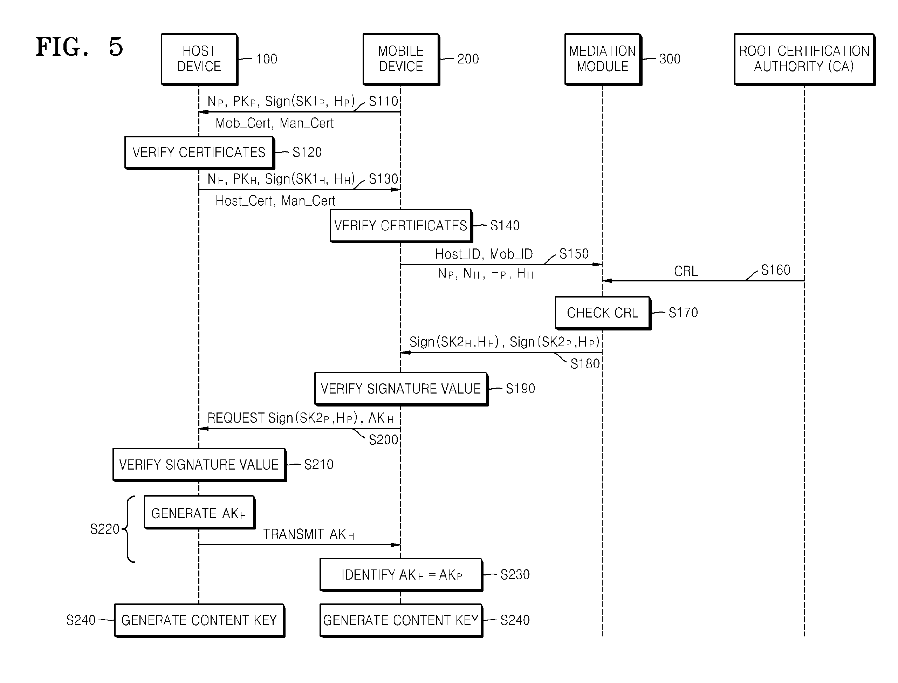

FIG. 5 illustrates a mutual authentication method between the host device 100 and the mobile device 200 using the mediation module 300.

As shown in FIG. 5, when the host device 100 is connected to the mobile device 200, the host device 100 and the mobile device 200 exchange public keys, signatures, certificates and random numbers with each other.

First, the mobile device 200, which stores the partial private key $SK1_P$, transmits the public key $PK_P$, a random number $N_P$ for the mobile device 200, a partial signature value $Sign(SK1_P, H_P)$ obtained by digitally signing a Hash function $H_P$ by using the partial private key $SK1_P$, the certificate Mob_Cert for the mobile device 200, and the certificate Man_Cert for the upper level certification authority MA to the host device 100 (operation S110).

Unlike the related art technique, in order to prevent an access from an active attacker and improve security, the random number $N_P$ for the mobile device 200 and the signature value $Sign(SK1_P, H_P)$ obtained by signing the Hash function $H_P$ are transmitted to the host device 100. At this time, the Hash function $H_P$ is calculated by Equation 8.

[Equation 8]

$$H_P = Hash(PK_P \| N_H \| Host\_ID \| Mob\_ID)$$

The host device 100 verifies the transmitted certificates Mob_Cert and Man_Cert (operation S120).

Then, the host device 100, which stores the partial private key $SK1_H$, transmits the public key $PK_H$, a random number $N_H$, a partial signature value $Sign(SK1_H, H_H)$ obtained by digitally signing a Hash function $H_H$ by using the partial private key $SK1_H$, the certificate Host_Cert for the host device 100, and the certificate Man_Cert for the upper level certification authority MA to the mobile device 200 (operation S 130).

Like the mobile device 200, in order to prevent an access from an active attacker and improve security, the random number $N_H$ for the host device 200 and the signature value $Sign(SK1_H, H_H)$ obtained by signing the Hash function $H_H$ are transmitted to the mobile device 200. At this time, the Hash function $H_H$ is calculated by Equation 9.

[Equation 9]

$$H_H = Hash(PK_H \| N_P \| Host\_ID \| Mob\_ID)$$

Similarly, the mobile device 200 verifies the certificates Host_Cert and Man_Cert (operation S140) and obtains a certificate ID Host_ID of the host device 100.

Then, the mobile device 200 transmits the random numbers $N_P$ and $N_H$, the Hash functions $H_P$ and $H_H$, the certificate IDs Mob_ID and Host_ID (operation S150).

The mediation module 300 receives a previously updated CRL from the root certification authority CA (operation S160) and checks whether the certificate IDs Mob_ID and Host_ID exist in the stored CRL (operation S170). When the certificate IDs Mob_ID and Host_ID are not included in the CRL, partial signature values $Sign(SK2_H, H_H)$ and $Sign(SK2_P, H_P)$ are generated by using the stored partial private keys $SK2_P$ and $SK2_H$ and transmitted to the mobile device 200 (operation S180).

Specifically, the mediation module generates a partial signature value $Sign(SK2_H, H_H)$ obtained by signing the Hash function $H_H$ by using the partial private key $SK2_H$ of the host device 100 and a partial signature value $Sign(SK2_P, H_P)$ obtained by signing the Hash function $H_P$ by using the partial private key $SK2_P$ of the mobile device 200 and transmits the generated partial signature values Sign($SK2_H$, $H_H$) and Sign($SK2_P$, $H_P$) to the mobile device 200. At this time, the mobile device 200, which stores the partial signature value

Sign($SK1_H$, $H_H$), combines the partial signature value Sign($SK2_H$, $H_H$) transmitted from the mediation module 300 with the partial signature value Sign($SK1_H$, $H_H$). As a result, the mobile device 200 generates the total signature value Sign($SK_H$, $H_H$) and verifies the generated total signature value

Sign($SK_H$, $H_H$) (operation S190).

The mobile device 200 transmits the partial signature value Sign($SK2_P$, $H_P$), which is received from the mediation module 300, to the host device 100 and requests the host device 10 to provide the authentication key $AK_H$, at the same time (operation S200).

At this time, the host device 100, which stores the partial signature value

Sign($SK1_P$, $H_P$), combines the partial signature value Sign($SK2_P$, $H_P$) transmitted from the mediation module 300 with the partial signature value Sign($SK1_P$, $H_P$). As a result, the host device 100 generates the total signature value Sign($SK_P$, $H_P$) and verifies the generated total signature value Sign($SK_P$, $H_P$) (operation S190).

Then, the host device 100 generates the authentication key $AK_H$ by using the Hash function as in Equation 10 and transmits the generated authentication key $AK_H$ to the mobile device 200 (operation S220).

[Equation 10]

$$AK_H = Hash(g^{XY} \| N_H \| N_P \| Host\_ID \| Mob\_ID)$$

Similarly, the mobile device 200 calculates the authentication key $AK_P$ by using the Hash function as in Equation 11 and compares the received authentication key $AK_H$ of the host device 100 with the calculated authentication key $AK_P$ of the mobile device 200 so as to check whether the received authentication key $AK_H$ of the host device 100 is the same as the calculated authentication key $AK_P$ of the mobile device 200 (operation S230).

[Equation 11]

$$AK_P = Hash(g^{XY} \| N_H \| N_P \| Host\_ID \| Mob\_ID)$$

Then, when the authentication key $AK_H$ of the host device 100 is the same as the authentication key $AK_P$ of the mobile device 200, the mutual authentication process between the host device 100 and the mobile device 200 is performed.

Accordingly, the host device 100 generates a content key for encrypting or decrypting a content from the authentication key $AK_H$, and the mobile device 200 generates a content key for encrypting or decrypting the content from the authentication key $AK_P$ (operation S240).

When the host device 100 encrypts the content by using the content key and transmits the encrypted content to the mobile device 200, the mobile device 200 can decrypt the content by using the generated content key.

Unlike the related art technique, in the exemplary embodiment of the present invention, the host device 100 and the mobile device 200 divide each private key into two partial private keys. A partial private key of the host device 100 and a partial private key of the mobile device 200 are transmitted to the mediation module 300. The total signature value is generated by using the partial signature value received from the mediation module 300. The authentication key is generated after the total signature value is verified.

If the partial signature value is intercepted by an active attacker, the active attacker cannot generate a valid authentication key by using the partial signature value. Since information including a random number is transmitted, security is remarkably improved as compared with the related art technique. In addition, it is possible to secure that the certificate is valid when the signature is generated.

In addition, since the mediation module 300 can previously check the CRL before the authentication key is generated, unlike the related art technique, the host device 100 can also check whether the certificate of the mobile device 200 is valid.

As described above, in the mutual authentication method between devices using the mediation module, it is possible to maintain high level security in the mutual authentication between the host device and the mobile device by checking whether a certificate is valid through a certification authority before verifying a signature value by using the mediation module.

The mutual authentication method between devices using the mediation module according to an exemplary embodiment of the present invention can be written as computer programs. Codes and code segments constituting the program can be easily construed by computer programmers skilled in the art to which the present invention pertains. In addition, the mutual authentication method between devices using the mediation module is embodied by storing the program in a computer readable media, reading the program by using a computer, and executing the program. The computer readable media include magnetic recording media, and optical recording media.

While the present invention has been particularly shown and described with reference to exemplary embodiments thereof, it will be understood by those skilled in the art that various changes in form and details may be made therein without departing from the spirit and scope of the present invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  A method of mediating a mutual authentication process between a device (200) and a host device (100), the method comprising:

    storing a first partial private key obtained by dividing a first private key of the device;
    storing a second partial private key obtained by dividing a second private key of the host device;
    receiving unique identifiers (IDs) and random numbers for the device and the host device from the device and determining whether the unique IDs are valid; and
    generating a first signature value by using the first partial private key and a second signature value by using the second partial private key if the unique IDs are valid, and transmitting the generated first and second signature values to the device.

2.  The method of claim 1, wherein the device stores a third partial private key obtained by dividing the first private key, and the host device stores a fourth partial private key obtained by dividing the second private key.

3.  The method of claim 2, wherein before receiving the unique IDs from the device, the device transmits to the host device a certificate on the device and a third signature value generated by using the third partial private key , and the host device transmits to the device a certificate on the host device and a fourth signature value generated by using the fourth partial private key.

4.  The method of claim 3, wherein the device generates and verifies a total signature value for the host device by combining the second signature value with the fourth signature value after receiving the first and second signature values, and generates a first authentication key for the device.

5.  The method of claim 4, wherein the host device generates and verifies a total signature value for the device by combining the first signature value with the third signature value after receiving the first signature value, and generates a second authentication key for the host device.

6.  The method of claim 5, wherein if the first authentication key is the same as the second authentication key, the host device generates a content key for encrypting or decrypting content.

7.  The method of any of claims 3-6, wherein in the determining whether in the unique IDs are valid, it is determined whether the unique IDs are valid by using a certificate revocation list updated by a certification authority.

8. A mutual authentication method with a host device (100) by using a mediation module (300) connected to the host device, the mutual authentication method comprising:

   dividing the first private key into first and second partial private keys and transmitting the first partial private key to the mediation module;
   generating a first signature value from the second partial private key, and transmitting the first signature value to the host device;
   transmitting unique identifiers (IDs) and random numbers to the mediation module; and
   generating and verifying a total signature value for the host device by using a second signature value received from the mediation module, and generating a first authentication key, if the unique IDs are valid.

9. The mutual authentication method of claim 8, further comprising receiving a third signature value from the host device, wherein a second private key of the host device is divided into third and fourth partial private keys, the third partial private key is stored in the mediation module, the fourth partial private key is stored in the host device, and the third signature value is generated by using the fourth partial private key.

10. The mutual authentication method of claim 9, further comprising, if the unique IDs are valid, receiving a fourth signature value generated by using the third partial private key and the second signature value generated by using the first partial private key, and generating and verifying a total signature value for the host device by combining the fourth signature value with the third signature value.

11. The mutual authentication method of claim 10, further comprising transmitting the second signature value to the host device, wherein a content key for encrypting or decrypting a content is generated, if a second authentication key generated by the host device is the same as the first authentication key.

12. The mutual authentication method of claim 11, wherein in the host device, the second authentication key is generated by combining the second signature value with the first signature value.

13. A mediation module (300) comprising:

   a key storage unit (320) which stores a first partial private key obtained by dividing a first private key of a device and a second partial private key obtained by dividing a second private key of a host device;
   a control unit (340) which receives unique identifiers (IDs) and random numbers for the device and the host device, and determines whether the unique IDs are valid; and
   a mediation module which generates a first signature value by using the first partial private key and a second signature value by using the second partial private key, if the unique IDs are valid.

14. The mediation module of claim 13, wherein the device stores a third partial private key obtained by dividing the first private key, and the host device stores a fourth partial private key obtained by dividing the second private key.

15. The mediation module of claim 14, wherein before receiving the unique IDs from the device, the device transmits to the host device a certificate on the device and a third signature value generated by using the third partial private key , and the host device transmits to the device a certificate on the host device and a fourth signature value generated by using the fourth partial private key.

16. The mediation module of claim 15, wherein the device generates and verifies a total signature value for the host device by combining the second signature value with the fourth signature value after receiving the first and second signature values, and generates a first authentication key for the device.

17. The mediation module of claim 16, wherein the host device generates and verifies a total signature value for the device by combining the first signature value with the third signature value after receiving the first signature value, and generates a second authentication key for the host device.

18. The mediation module of any of claims 13-17, wherein the control unit (340) checks whether the unique IDs are valid by using a certificate revocation list updated by a certification authority.

19. A device (200) which performs a mutual authentication process with a host device (100) by using a mediation module (300) connected to the host device, the device comprising:

a key generation unit which divides a first private key into first and second partial private keys;

an interface (210) which transmits the first partial private key and unique identifiers (IDs) and random numbers to the mediation module;

a digital signature unit (230) which generates a first signature value from the second partial private key, and transmits the first signature value to the host device via the interface; and

a control unit (240) which generates and verifies a total signature value for the host device by using a second signature value received from the mediation module if the unique IDs are valid, and generates a first authentication key.

20. The device of claim 19, wherein a second private key of the host device is divided into third and fourth partial private keys and the third partial private key is stored in the mediation module, and a third signature value generated by using the fourth partial private key.

21. The device of claim 20, wherein if the unique IDs are valid, the control unit receives a fourth signature value generated by using the first partial private key and the second signature value generated by using the third partial private key, and generates and verifies a total signature value for the host device by combining the second signature value with the third signature value.

22. The device of claim 21, wherein the fourth signature value is transmitted to the host device, and a content key for encrypting or decrypting a content is generated when a second authentication key generated by the host device is the same as the first authentication key.

23. A system which performs a mutual authentication process, the system comprising:

a host device (100);
a device (200); and
a mediation module (300) connected to the host device and the device,
wherein the mediation module stores a first partial private key obtained by dividing a first private key of the device and a second partial private key obtained by dividing a second private key of the host device,
wherein the device transmits to the host device a first signature value generated by using a third private key obtained by dividing the first private key, the host device transmits to the device a second signature value generated by using a fourth private key obtained by dividing the second private key, and
wherein the device transmits unique identifiers (IDs) and random numbers to the mediation module, generates and verifies a total signature value for the host device by using a third signature value received from the mediation module if the unique IDs are valid, and generates a first authentication key.

24. The system of claim 23, wherein when the unique IDs are valid, the device receives the third signature value generated by using the second partial private key and a fourth signature value generated by using the a first partial private key from the mediation module, generates and verifies a total signature value for the host device by combining the third signature value with the second signature value, and generates a first authentication key.

25. The system of claim 24, wherein the host device receives the fourth signature value from the device, generates and verifies a total signature value for the device by combining the fourth signature value with the first signature value, and generates a second authentication key.

26. The system of claim 25, wherein when the first authentication key is the same as the second authentication key, the device and the host device generate a content key for encrypting or decrypting a content.

27. A computer-readable recording medium having embodied thereon a computer program for performing a method of mediating a mutual authentication process between a device (200) and a host device (100), the method comprising:

storing a first partial private key obtained by dividing a first private key of the device;
storing a second partial private key obtained by dividing a second private key of the host device;
receiving unique identifiers (IDs) and random numbers for the device and the host device from the device and determining whether the unique IDs are valid; and
generating a first signature value by using the first partial private key and a second signature value by using the (second partial private key if the unique IDs are valid, and transmitting the generated first and second signature values to the device.

**28.** A computer-readable recording medium having embodied thereon a computer program for performing a mutual authentication method with a host device (100) by using a mediation module (300) connected to the host device, the mutual authentication method comprising:

dividing the first private key into first and second partial private keys and transmitting the first partial private key to the mediation module;

generating a first signature value from the second partial private key, and transmitting the first signature value to the host device;

transmitting unique identifiers (IDs) and random numbers to the mediation module; and

generating and verifying a total signature value for the host device by using a second signature value received from the mediation module, and generating a first authentication key, if the unique IDs are valid

# FIG. 1 (RELATED ART)

```
┌─────────────────────────────────────────────┐
│        ROOT CERTIFICATION AUTHORITY (CA)     │
│              <SK_CA , PK_CA >                 │
└─────────────────────────────────────────────┘
                      │
                      ▼
┌─────────────────────────────────────────────┐
│   UPPER LEVEL CERTIFICATION AUTHORITY (MA)   │
│              <SK_M , PK_M >                   │
└─────────────────────────────────────────────┘
                      │
         ┌────────────┴────────────┐
         ▼                         ▼
      ⟋10                        ⟋20
┌──────────────────┐      ┌──────────────────┐
│   HOST DEVICE    │------│   MOBILE DEVICE   │
│  <SK_H , PK_H >  │      │  <SK_P , PK_P >   │
└──────────────────┘      └──────────────────┘
```

EP 1 971 074 A2

**FIG. 2**
**(RELATED ART)**

| HOST DEVICE — 10 | MOBILE DEVICE — 20 | ROOT CERTIFICATION AUTHORITY ( CA) |

PK$_P$, Sign (SK$_P$, PK$_P$) — S10

Mob_Cert, Man_Cert

VERIFY SIGNATURE VALUE AND CERTIFICATE — S20

PK$_H$, Sign (SK$_H$, PK$_H$) — S30

Host_Cert, Man_Cert

VERIFY SIGNATURE VALUE AND CERTIFICATE — S40

REQUEST AK$_H$

S50 { GENERATE AK$_H$

TRANSMIT AK$_H$

IDENTIFY AK$_H$ = AK$_P$ — S60

Host_ID, Mob_ID — S70

S80

CHECK CRL

VALID ID DETERMINATION MESSAGE
S90

GENERATE CONTENT KEY — S100    GENERATE CONTENT KEY — S100

# FIG. 3

```
┌─────────────────────────────────────────────┐
│   ROOT CERTIFICATION AUTHORITY (CA)           │
│   <SK_CA , PK_CA >                             │
└─────────────────────────────────────────────┘
                      │
                      ▼
┌─────────────────────────────────────────────┐
│  UPPER LEVEL CERTIFICATION AUTHORITY (MA)     │
│  <SK_M , PK_M >                                │
└─────────────────────────────────────────────┘
                      │
```

ROOT CERTIFICATION AUTHORITY (CA)
$<SK_{CA} , PK_{CA} >$

UPPER LEVEL CERTIFICATION AUTHORITY (MA)
$<SK_M , PK_M >$

100

HOST DEVICE
$<SK1_H , PK_H>$

200

MOBILE DEVICE
$<SK1_P , PK_P >$

300

MEDIATION MODULE
$<SK2_H , SK2_P >$

## FIG. 4A

## FIG. 4B

# FIG. 5

HOST DEVICE ~ 100

MOBILE DEVICE ~ 200

MEDIATION MODULE ~ 300

ROOT CERTIFICATION AUTHORITY (CA)

$N_P$, $PK_P$, $Sign(SK1_P, H_P)$ — S110
Mob_Cert, Man_Cert

VERIFY CERTIFICATES — S120

$N_H$, $PK_H$, $Sign(SK1_H, H_H)$ — S130
Host_Cert, Man_Cert

VERIFY CERTIFICATES — S140

Host_ID, Mob_ID — S150
$N_P$, $N_H$, $H_P$, $H_H$

CRL — S160

CHECK CRL — S170

$Sign(SK2_H, H_H)$, $Sign(SK2_P, H_P)$ — S180

VERIFY SIGNATURE VALUE — S190

REQUEST $Sign(SK2_P, H_P)$, $AK_H$ — S200

VERIFY SIGNATURE VALUE — S210

GENERATE $AK_H$ } S220

TRANSMIT $AK_H$

IDENTIFY $AK_H = AK_P$ — S230

GENERATE CONTENT KEY — S240

S240 — GENERATE CONTENT KEY